# EUROPÄISCHE PATENTANMELDUNG

(11) **EP 0 903 096 A2**
(43) Veröffentlichungstag der Anmeldung: **24.03.1999**
(21) Anmeldenummer: 98890246.6
(22) Anmeldetag: 21.08.1998
(51) Int. Cl.: A47J 27/00, A47J 37/01

(54) **Vorrichtung zum Garen von Nahrungsmitteln**

(30) Priorität: 18.09.1997 AT 1579/97
(71) Anmelder: "Conprojekt" Handelsvertretung und technisches Büro für Maschinenbau Frantl & Co OHG, A-1080 Wien (AT)
(72) Erfinder: Frantl, Erich, 1080 Wien (AT)
(74) Vertreter: Beer, Manfred, Dipl.-Ing.

(57) **Zusammenfassung**

Eine Vorrichtung zum Braten oder Backen von Nahrungsmitteln (4) in Form eines Gefäßes (1) mit Deckel (8) besitzt vom Boden (10) des Gefäßes (1) nach oben abstehend angeordnete Nadeln (2), die in das in das Gefäß (1) eingebrachte Nahrungsmittel (4) eindringen. Das Gefäß (1) wird von einer Heizeinrichtung (6) erwärmt. Auch die Nadeln (2) können von einer von der Heizung (6) des Gefäßes (1) unabhängigen Heizung (20) beheizt werden, so daß von diesen von der Beheizung des Gefäßes 1 unabhängig Wärme unmittelbar in das Innere des Nahrungsmittels (4) abgegeben wird und dieses gleichmäßig erwärmt ist.

Oberhalb des Bodens (10) des Gefäßes (1) ist eine Lochplatte (3) vorgesehen, auf der das Nahrungsmittel (4), das zu garen ist, aufliegt und mit deren Hilfe das Nahrungsmittel (4) von den Nadeln (2) abgezogen werden kann. Der Abstand der Lochplatte (3) vom Boden (10) des Gefäßes (1) ist veränderbar.

Durch die erfindungsgemäß vorgesehenen, unmittelbar oder mittelbar beheizten Nadeln (2) wird das Nahrungsmittel (4) gleichmäßig erwärmt, so daß ohne die Gefahr von örtlichen Überhitzungen die Kochzeiten kürzer sind und ein gleichmäßig gegartes Nahrungsmittel erhalten wird.

## Beschreibung

Die Erfindung betrifft eine Vorrichtung zum Garen von Nahrungsmitteln, mit einem topf- oder pfannenartigen, gegebenenfalls durch einen Deckel verschlossenen Gefäß, das mit beheizbaren Nadeln ausgerüstet ist, die in dem für die Aufnahme des zu garenden Nahrungsmittels bestimmten Raum verteilt sind, und die aus wärmeleitendem Werkstoff gefertigt sind.

Bei den herkömmlichen Garvorgängen, z.B. Brat- und Backvorgängen am Herd oder im Backofen, werden die Nahrungsmittel in entsprechend geformten Geschirren gegart. Dabei werden vor allem an den Stellen, an denen das zu garende Nahrungsmittel auf dem Boden und den Seitenwänden des Gefäßes anliegt, Außentemperaturen zwischen 125 und 250°C erreicht. Im Inneren des Nahrungsmittels wird bis zum Ende des Garvorganges je nach dem Querschnitt des Nahrungsmittels nur etwa die Hälfte der Außentemperatur oder weniger erreicht, so daß kein gleichmäßiges Garen über den Querschnitt des Nahrungsmittels stattfindet, wenn dieses nicht flüssig oder feingliedrig ist und gerührt werden kann. Bei herkömmlichen Brat- und Backvorgängen in den üblichen Geschirren wird die Oberfläche fester Nahrungsmittel meist weit über die Verdampfungstemperatur von Wasser erhitzt, dabei ausgelaugt oder ausgetrocknet und insbesondere dort, wo das Nahrungsmittel am Geschirr anliegt, angekohlt und damit gesundheitsschädlich. Hingegen wird im Inneren des Nahrungsmittels durch dessen isolierende Wirkung zum Teil nicht jene Temperatur erreicht, die alle gesundheitsschädigenden Keime abtötet.

Das langsame Eindringen von Wärme in das Innere der Nahrungsmittel verursacht auch lange Garzeiten, damit einen höheren Energiebedarf und die übermäßige Vernichtung wertvoller Nährstoffe.

Als bekannte Möglichkeit zum schnellen, gleichmäßigen und gesteuerten Erwärmen von Nahrungsmitteln beim Garen sind derzeit bloß Mikrowellenherde und deren Kombinationen mit die Oberfläche des Nahrungsmittels zum Bräunen usw. erhitzenden Zusatzeinrichtungen bekannt. Der Einsatz der Mikrowelle beim Garen von Nahrungsmitteln ist jedoch nicht unumstritten.

Aus der DE 30 09 386 A ist ein Bratenbesteck bekannt, das gegebenenfalls auf einem Träger montiert, mehrere Nadeln aufweist, die in das zu garende Nahrungsmittel eingeschoben werden sollen. In der DE 30 09 386 A ist auch eine Ausführungsform beschrieben, bei der die Nadeln rohrförmig ausgebildet und Löcher in den Rohrwandungen aufweisen, so daß Bratensaft in das Innere eines Bratens zugeführt werden kann. Irgendwelche Hinweise darauf, daß die Nadeln der DE 30 09 386 A gesondert beheizt werden sollen, sind in der DE 30 09 386 A nicht enthalten. Vielmehr soll mit diesen Nadeln im Bratrohr oder beim Grillen Wärme in das Fleischinnere geleitet werden, um den Garvorgang zu verkürzen. Daher wird in der DE 30 09 386 A auch vorgeschlagen, am Bratenbesteck Kugeln u. dgl. anzubringen, um die Wärmeaufnahme zu verbessern.

Die EP 0 477 168 A beschreibt ein Kochgerät zum Garen von Lebensmitteln, bestehend aus einem Behälter mit Deckel, wobei im Behälter eine Platte mit Zähnen montiert ist. Über die Zähne kann eine Lochplatte geschoben werden, so daß auf der Lochplatte aufgelegtes Nahrungsmittel beim Niederklappen des Deckels von einer an diesem montierten Druckplatte heruntergedrückt wird, wobei die Zähne in das Nahrungsmittel eindringen sollen. Zum Beheizen des Kochgerätes der EP 0 477 168 A ist dem Boden des Behälters außen eine Heizmatte zugeordnet. Eine gesonderte Beheizung der Zähne ist in der EP 0 477 168 A nicht erwähnt.

Aus der DE 44 04 381 C ist eine Garstation, die oben von einer Haube und unten von Förderbändern begrenzt ist. Innerhalb des als "Vorgarstation" bezeichneten Bereichs der Garstation sind innerhalb der Haube zu einem Nadelkasten zusammengefaßte Nadeln vorgesehen, die relativ zu dem Förderband der Garstation verstellbar sind. Durch die Nadeln, die als Injektionsnadeln ausgeführt sind, kann dem zu garenden Nahrungsmittel - im Falle der DE 44 04 381 C Kohlköpfe - heißes Wasser zugeführt werden. Zweck der Behandlung der Kohlköpfe bei der DE 44 04 381 C ist es, diese für das anschließende "Blättern" schonend und gleichmäßig zu erhitzen und vorzugaren. Durch das injizierte Heizwasser werden die Kohlköpfe aufgelockert und dann der Nachgarstation zugeführt. Damit soll erreicht werden, daß sich die Kohlköpfe im Anschluß an den Garvorgang leicht "blättern" lassen.

Die Erfindung hat sich zur Aufgabe gestellt, eine einfache und auf verschiedene Möglichkeiten der Energiezufuhr (Wärmezufuhr) anpaßbare Vorrichtung bereitzustellen, mit der Nahrungsmittel schneller und gleichmäßiger gegart werden können als bisher.

Erfindungsgemäß wird diese Aufgabe mit einer Vorrichtung der eingangs genannten Gattung dadurch gelöst, daß über die Nadeln wenigstens eine zum Boden des Gefäßes parallele und als Auflage für das zu garende Nahrungsmittel dienende Lochplatte gesteckt ist, deren Abstand vom Boden veränderbar ist, und daß die Nadeln direkt oder indirekt beheizbar sind.

Bevorzugte und vorteilhafte Ausführungsformen der erfindungsgemäßen Vorrichtung sind Gegenstand der Unteransprüche.

Bei der Erfindung kann die durch die Nadeln in das Innere des zu garenden Nahrungsmittels geleitete Wärmemenge weitgehend unabhängig von der Heizung des Gefäßes, des Deckels und/oder der Lochplatte so gewählt werden, daß sie an die Art, Struktur, Beschaffenheit und Größe des Nahrungsmittels angepaßt ist. Dabei kann die über die Nadeln zugeführte Wärmemenge während des Garvorganges falls erforderlich auch unabhängig von der Heizung des Gefäßes selbst eingestellt werden.

Da die Lochplatte bei der Erfindung gegenüber dem Boden des Gefäßes verstellt werden kann, ist es auf einfache Weise möglich, die Temperatur der Lochplatte, auf der das zu garende Nahrungsmittel aufliegt, auf den gewünschten oder erforderlichen Wert einzustellen, auch wenn der Lochplatte keine gesonderte Heizung zugeordnet ist. So ergibt sich auf einfache Weise eine von der Wärmezufuhr zu der Lochplatte nicht unmittelbar abhängige Wärmezufuhr zu den Nadeln. Dies auch dann, wenn das Gefäß auf einer beheizten Fläche, z.B. auf einer Kochplatte eines Herdes, steht.

Die erfindungsgemäße Vorrichtung kann ohne weiteres an die verschiedenen Garvorgänge (Kochen, Braten oder Backen) angepaßt werden, also beispielsweise die Form eines Topfes, einer Pfanne besitzen, und ist in gleicher Weise sowohl für flächige Nahrungsmittel (Brat- und Backgut) als auch für hohe oder dicke Nahrungsmittel (Backgut) einsetzbar.

Im folgenden werden Ausführungsbeispiele der erfindungsgemäßen Vorrichtung unter Bezugnahme auf die angeschlossenen Zeichnungen erläutert. Es zeigt:
Fig. 1 im Schnitt teilweise eine erste Ausführungsform einer erfindungsgemäßen Vorrichtung in Form einer Pfanne oder eines flachen Topfes,
Fig. 2 teilweise eine Draufsicht zu Fig. 1,
Fig. 3 im Schnitt teilweise eine abgeänderte Ausführungsform,
Fig. 4 eine Draufsicht zu Fig. 3,
Fig. 5 teilweise eine weitere Ausführungsform im Schnitt,
Fig. 6 im Schnitt teilweise eine Ausführungsform mit Deckel,
Fig. 7 teilweise eine Ausführungsform der erfindungsgemäßen Vorrichtung mit druckdicht aufsetzbarem Deckel im Schnitt,
Fig. 8 im Schnitt teilweise eine Ausführungsform mit Deckel,
Fig. 9 teilweise eine weitere Ausführungsform einer erfindungsgemäßen Vorrichtung im Schnitt,
Fig. 10 teilweise im Schnitt eine weitere Ausführungsform,
Fig. 11 in Draufsicht teilweise eine weitere Ausführungsform und
Fig. 12 teilweise eine Ausführungsform der erfindungsgemäßen Vorrichtung mit am Topf verankerbarem Deckel im Schnitt.

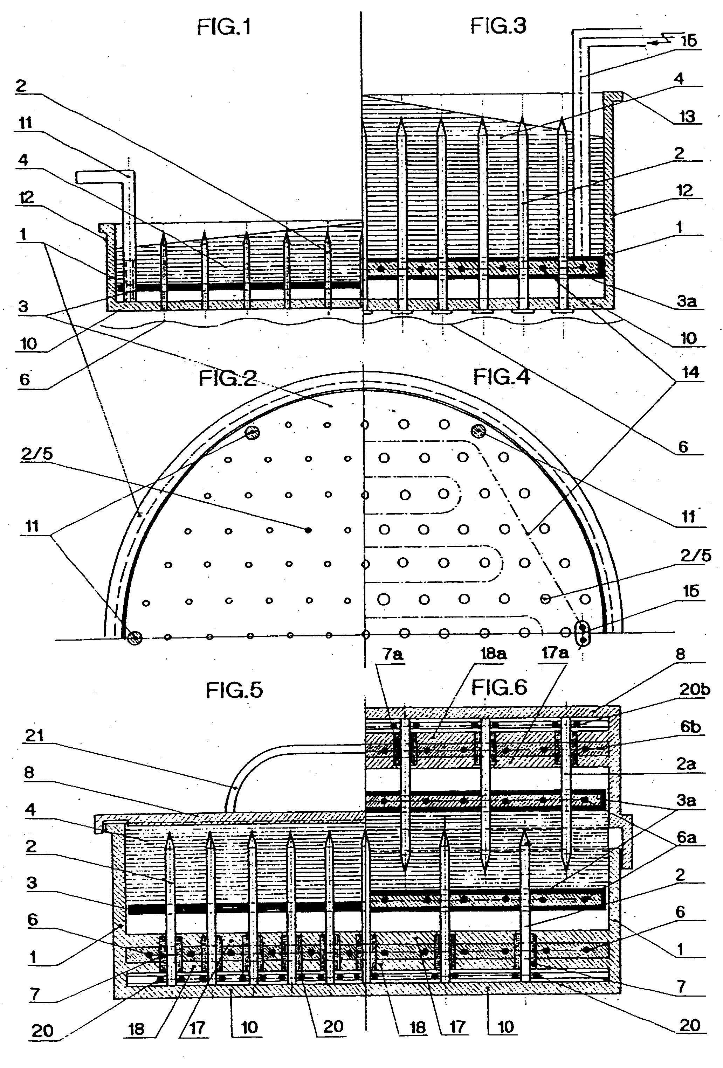

Die in Fig. 1 gezeigte (einfache) Ausführungsform einer erfindungsgemäßen Vorrichtung besitzt ein Gefäß 1 in Form einer Pfanne oder eines flachen Topfes mit einem auf eine Heizfläche 6 aufzustellenden Boden 10. In den Boden 10 sind mehrere Nadeln 2 eingesetzt, so daß zwischen den aus wärmeleitendem Werkstoff bestehenden Nadeln 2 einerseits und dem Boden 10 des Gefäßes 1 anderseits ein guter Wärmeübergang vorliegt. Die Nadeln 2 sind in dem Gefäß 1 (eng) nebeneinandergereiht, wobei zwischen den einzelnen Nadeln 2 beispielsweise ein Abstand von 1 cm vorliegen kann. Die Nadeln 2 haben eine beliebige Querschnittsform - im gezeigten Ausführungsbeispiel ist dieser kreisrund - und haben beispielsweise einen Durchmesser von 2 mm.

Über die Nadeln 2 ist verschiebbar eine Lochplatte 3 gesteckt, wozu diese entsprechend der Anordnung der Nadeln 2 mit Durchgangslöchern 5 versehen ist. Die Lochplatte 3 bildet eine Auflagefläche für das zu garende Nahrungsmittel 4 und ist gegenüber dem Boden 10 des Gefäßes 1 anheb- und absenkbar, da die Löcher 5 so bemessen sind, daß die Lochplatte 3 entlang der Nadeln 2 verschoben werden kann.

Zum Einstellen des Abstandes der Lochplatte 3 vom Boden 10 des Gefäßes 1 sind im Bereich des Randes der Lochplatte 3 in Gewindebohrungen mehrere bereichsweise ein Außengewinde aufweisende Stützstifte 11 eingeschraubt. Durch Verändern der Stützstifte 11 (Drehen derselben in den Gewindebohrungen in der Lochplatte 3) kann der Abstand der Lochplatte 3 vom Boden 10 des Gefäßes 1 verändert werden. Die Stützstifte 11 können auch dazu dienen, die Lochplatte 3 mitsamt dem auf ihr angeordnetem Nahrungsmittel 4 aus dem Gefäß herauszuheben und gleichzeitig von den Nadeln 2 abzuziehen, wenn der Garvorgang beendet ist.

Dadurch, daß die Nadeln 2 mit dem Boden 10 des Gefäßes 1 in Form eines Topfes oder einer Pfanne in gut wärmeleitender Verbindung stehen und selbst aus gut wärmeleitendem Werkstoff gefertigt sind, wird das Nahrungsmittel 4 (Gargut) nicht nur über die durch den Boden 10 und die Lochplatte 3 von unten her in das Nahrungsmittel 4 eindringende Wärme gegart, sondern auch über die in das Innere des Gargutes 4 durch die Nadeln 2 unmittelbar abgegebene Wärme.

Aus Fig. 2 ist ersichtlich, daß die Nadeln 2 über die Bodenfläche des Gefäßes 1 also den Topf oder die Pfanne, gleichmäßig verteilt angeordnet sind.

Dadurch, daß die Nadeln 2 an ihren freien Enden zugespitzt sind, dringen sie leicht in das Nahrungsmittel 4 ein, wenn dieses in den Topf oder die Pfanne eingelegt wird.

Bei der in den Fig. 3 und 4 gezeigten Ausführungsform einer erfindungsgemäßen Vorrichtung in Form eines Kochgeschirrs 1 sind wieder die mit dem Boden 10 verbundenen Nadeln 2 vorgesehen, die sich, so wie in der Ausführungsform von Fig. 1 bis etwa in die Höhe des freien Randes 13 der Seitenwand 12 des Kochgeschirrs 1 erstrecken, d.h. die Spitzen der Nadeln 2 liegen knapp unter dem freien Rand 13 des Kochgeschirrs 1, das in Fig. 3 höher ausgebildet ist als in Fig. 1.

Bei der in Fig. 3 gezeigten Ausführungsform ist die Lochplatte 3a selbst beheizbar ausgebildet. Dies wird dadurch erreicht, daß im Inneren der zweischalig ausgebildeten Lochplatte 3a eine Heizeinrichtung 14 vorgesehen ist. Diese Heizeinrichtung 14 besteht beispielsweise aus einem elektrischen Widerstandsdraht, der über eine Energiezufuhr 15 mit Strom versorgt wird.

Auch bei der in Fig. 3 gezeigten Ausführungsform sind verstellbare Stützstifte 11 vorgesehen, um den Abstand der Lochplatte 3a vom Boden 10 des Gefäßes 1 einzustellen.

Die Lochplatte 3 bzw. 3a, die Löcher 5 mit der Querschnittsform und im Raster der Nadeln 2 aufweist, dient einerseits zum Abziehen eines fertig gegarten Nahrungsmittels 4 von den in dieses vorher eingeschobenen Nadeln 2, anderseits als Auflage für das Nahrungsmittel 4, das mit (veränderbarem) Abstand vom Pfannenboden 10.

Wie erwähnt, werden die Vorrichtungen in Form von Töpfen, Pfannen, Kochgeschirren oder Bratgeschirren 1 bei den in Fig. 1 und 3 gezeigten Ausführungsformen vornehmlich von einer außerhalb der Vorrichtung liegenden oder an dieses angebauten Wärmequelle 6 erhitzt, wobei die Lochplatte 3 gegebenenfalls zusätzlich (oder alternativ) erhitzt werden kann.

Bei der Erfindung ist es auch möglich, die Vorrichtung, z.B. das Gefäß 1 und die in diesem vorgesehenen Nadeln 2 voneinander unabhängig und veränderbar zu beheizen. Eine solche Ausführungsform ist in Fig. 5 gezeigt. Die Beheizung des Gefäßes 1 von Fig. 5 erfolgt über eine, beispielsweise elektrische, Widerstandsheizung 6, die im Bereich des Bodens 10 des Gefäßes 1 vorgesehen und zwischen zwei sich parallel zum Boden 10 erstreckenden Zwischenwänden 17 und 18 aufgenommen ist.

Die Nadeln 2 durchsetzen die Zwischenwände 17 und 18 und die dazwischen liegende Heizung 6 im Bereich von thermisch isolierenden Hülsen 7 (z.B. Hülsen aus keramischem Werkstoff) und enden knapp über dem Boden 10 des Gefäßes 1, wo sie von einer Heizung 20 erwärmt werden. So wie die Heizung 6 kann die Heizung 20 eine elektrische Widerstandsheizung sein oder es wird zum Beheizen ein erhitztes, fluides Medium verwendet.

Fig. 5 zeigt noch, daß das Gefäß 1, wie dies üblich ist, mit einem Deckel 8 mit Griff 21 zugedeckt werden kann.

Die in Fig. 6 gezeigte Ausführunggsform einer Vorrichtung gemäß der Erfindung mit einem topfförmigen Gefäß 1 und einem Deckel 8, besitzt Nadeln 2, die unabhängig vom Gefäß 1 durch die Heizung 20 beheizt werden können. Im übrigen ist die Heizung 20 so ausgebildet, wie dies an Hand der Fig. 5 beschrieben worden ist. Der Deckel 8 weist im in Fig. 6 gezeigten Ausführungsbeispiel ebenfalls Nadeln 2a auf, die ähnlich wie die Nadeln 2 des unteren Teils des Gefäßes 1, von einer Heizung 20b beheizt werden können. Die Nadeln 2a durchsetzen im Bereich von isolierenden Hülsen 7a Zwischenwände 17a und 18a, zwischen welchen sich eine Heizung 6b befindet. Über die vom Deckel 8 nach unten weisenden Nadeln 2a ist eine Lochplatte 3a geschoben, die so wie die Lochplatte 3a des Unterteils mit einer Heizung 6a ausgestattet ist. Bei der in Fig. 6 gezeigten Ausführungsform der erfindungsgemäßen Vorrichtung ist die Anordnung der Nadeln 2 und 2a so getroffen, daß jeweils eine Nadel 2a in der Mitte zwischen zwei Nadeln 2 angeordnet ist und umgekehrt.

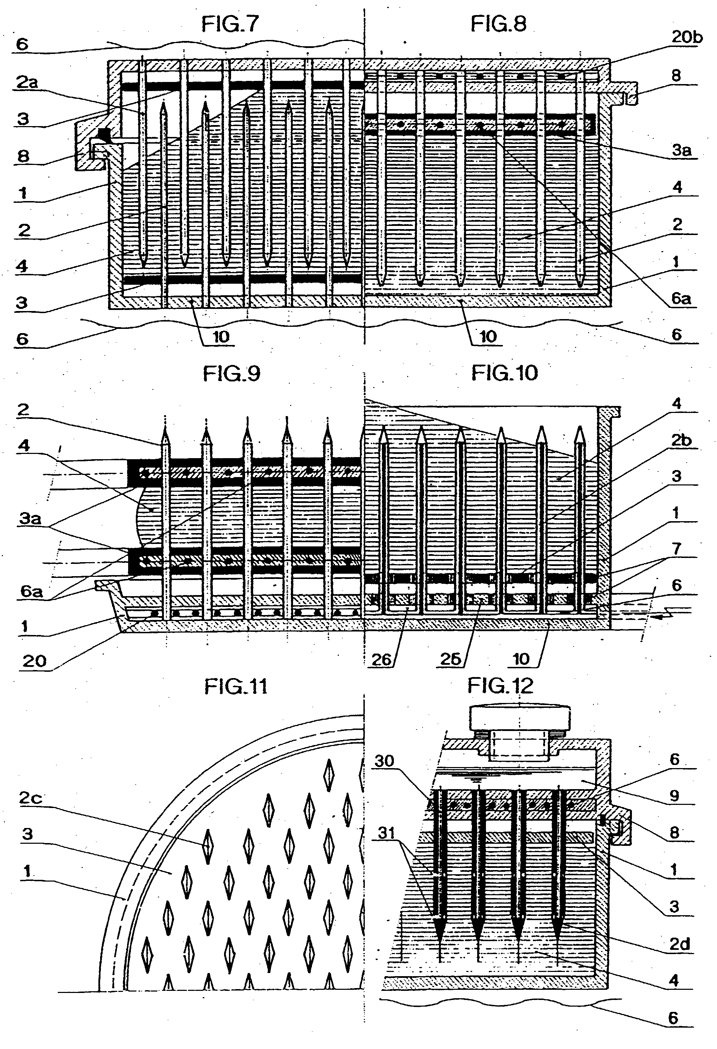

Die erfindungsgemäße Anordnung von Nadeln für die verbesserte Wärmezufuhr in das Innere von zu garenden (Kochen, Braten, Backen) Nahrungsmitteln kann auch bei sogenannten Druckkochtöpfen angewendet werden. Ein Ausführungsbeispiel hiefür zeigt Fig. 7.

Bei der in Fig. 7 gezeigten Ausführungsform sind die Nadeln 2 in dem Boden 10 des Gefäßes 1 des Druckkochtopfes so eingesetzt, daß ein guter Wärmeübergang zwischen Boden 10 und Nadeln 2 gewährleistet ist. In ähnlicher Weise sind Nadeln 2a in die obere Abschlußwand des Deckels 8 eingesetzt, wobei im in Fig. 7 gezeigten Ausführungsbeispiel vorgesehen ist, daß sowohl unterhalb des unteren Gefäßes 1 als auch oberhalb des Deckels 8 der Vorrichtung nach Fig. 7 eine Heizung 6 (symbolisiert durch eine Wellenlinie) vorgesehen ist. Wie bei den anderen Ausführungsformen sind über die Nadeln 2 und 2a Lochplatten 3 gesteckt.

Bei den in den Fig. 1, 2 und 7 gezeigten Ausführungsformen der erfindungsgemäßen Vorrichtung ist insoferne ein von der Beheizung des Gefäßes 1 oder des Deckels 8 weitgehend unabhängiges Beheizen der Nadeln 2 bzw. 2a möglich, als die Lochplatte 3, die über die vom Boden 10 des Gefäßes 1 bzw. vom Deckel 8 in den für die Aufnahme des zu garenden Nahrungsmittels 4 bestimmten Raum ragen, gesteckt ist, die eigentliche Beheizung des Gefäßes 1 bzw. des Deckels 8 ist. Es ist daher bei den in den Fig. 1, 2 und 7 gezeigten Ausführungsformen der erfindungsgemäßen Vorrichtung insoweit ein von der Beheizung des Gefäßes 1 bzw. des Deckels 8 wegen der Lochplatten 3 weitgehend unabhängiges Beheizen der Nadeln 3 möglich, obwohl diese mit dem Boden 10 des Gefäßes 1 bzw. dem Deckel 8 in wärmeleitender Verbindung stehen.

Bei der in Fig. 8 gezeigten Ausführungsform sind Nadeln 2 lediglich vom Deckel 8 ausgehend vorgesehen, d.h. am unteren Teil des Gefäßes 1, also der Pfanne oder des Topfes, sind keine Nadeln vorgesehen. Dabei ist die Anordnung so gewählt, daß die Nadeln 2 in dem doppelwandig ausgebildeten oberen Abschluß des Deckels 8 eingesetzt sind und von einer dort vorgesehenen Zusatzheizung 20 erwärmt werden können. Anstelle der in Fig. 8 gezeigten Lochplatte 3a mit Zusatzheizung 6a kann auch eine Lochplatte 3 ohne Heizung vorgesehen sein. Dem Nahrungsmittel 4, das in dem Gefäß 1 aufgenommen ist, wird Wärme von der Heizung 6 durch den Boden 10 hindurch und/oder von der Heizung 20 über die Nadeln 2 sowie die allenfalls beheizbar ausgebildete Lochplatte 3a zugeführt.

Es ist darauf hinzuweisen, daß bei der in Fig. 8 gezeigten Ausführungsform die Heizung 20b im Deckel 8 auch entfallen kann, wenn die Lochplatte 3a mit einer Heizung 6a ausgestattet ist, da die Heizung 6a auch die Nadeln 2 erwärmt.

Bei der in Fig. 9 gezeigten Ausführungsform der erfindungsgemäßen Vorrichtung ist die erfindungsgemäße Vorrichtung als flaches, pfannenartiges Gefäß 1 ausgebildet, von der die Nadeln 2 nach oben ragen und durch eine Heizung 20 beheizbar sind. Bei dem in Fig. 9 gezeigten Ausführungsbeispiel sind zwei Lochplatten 3a vorgesehen, die beide mit der Heizung 6a ausgerüstet sind. Die in Fig. 9 gezeigte Ausführungsform wird so verwendet, daß das Nahrungsmittel 4, das zu garen ist, zwischen die beiden Lochplatten 3a eingelegt wird.

Es besteht auch die Möglichkeit, die Nadeln 2 unmittelbar zu beheizen. Eine solche Ausführungsform zeigt Fig. 10, wobei im gezeigten Ausführungsbeispiel die Nadeln 2 durch eine in ihnen angeordnete elektrische Widerstandsheizung 2b beheizt werden, deren Stromversorgung über den zwischen einer Zwischenwand 25 und dem Boden 10 des Gefäßes 1 vorgesehenen Raum 26 erfolgt. Anstelle einer elektrischen Widerstandsheizung können die Nadeln 2b durch ein erhitztes fluides Medium beheizt werden.

Wenn, wie bei der in Fig. 10 gezeigten Ausführungsform, die Nadeln 2b beheizt werden, empfiehlt es sich, diese gegenüber den anderen Bauteilen der erfindungsgemäßen Vorrichtung, z.B. des Kochgeschirrs thermisch zu isolieren. Dies kann beispielsweise dadurch erfolgen, daß in der Zwischenwand und der Lochplatte 3 im Bereich der Öffnungen 5, durch welche die Nadeln 2 ragen, thermisch isolierende Einsätze 7, z.B. Keramikeinsätze, angeordnet sind.

Wie in Fig. 11 gezeigt, sind die Nadeln 2c nicht auf solche mit runder Querschnittsform beschränkt, sondern es können auch Nadeln 2c mit einer anderen als runden Querschnittsform, z.B. einer rhombusförmigen Querschnittsform mit spitz zusammenlaufendem freien Ende ausgebildet sein. Dies ergibt den Vorteil, daß bei entsprechend versetzter Nadelanordnung die Fasern der Nahrungsmittel (Fleisch) in kurzen Abständen durchtrennt werden, wenn die Nadeln 2c in dieses eindringen.

Fig. 12 zeigt auch die Möglichkeit, die Nadeln 2d durch Kanäle 30 hohl auszubilden und mit einem beispielsweise im Deckel 8 vorgesehenen Hohlraum 9 zu verbinden, so daß über die Nadeln 2d durch die in diesen vorgesehenen Austrittsöffnungen 31 ein Medium unmittelbar in das Gargut eingebracht werden kann. Bei diesem Medium kann es sich um Dampf, Flüssigkeiten, flüssige Gewürze usw. handeln.

Zusammenfassend kann ein Ausführungsbeispiel der Erfindung wie folgt beschrieben werden:

Eine Vorrichtung zum Braten oder Backen von Nahrungsmitteln 4 in Form eines Gefäßes 1 mit Deckel 8 besitzt vom Boden 10 des Gefäßes 1 nach oben abstehend angeordnete Nadeln 2, die in das in das Gefäß 1 eingebrachte Nahrungsmittel 4 eindringen. Das Gefäß 1 wird von einer Heizeinrichtung 6 erwärmt. Die Nadeln 2 können von einer von der Heizung 6 des Gefäßes 1 unabhängigen Heizung 20 beheizt werden, so daß von diesen Wärme unmittelbar in das Innere des Nahrungsmittels 4 abgegeben wird und dieses gleichmäßig erwärmt ist.

Oberhalb des Bodens 10 des Gefäßes 1 ist eine Lochplatte 3 vorgesehen, auf der das Nahrungsmittel 4, das zu garen ist, aufliegt und mit deren Hilfe das Nahrungsmittel 4 von den Nadeln 2 abgezogen werden kann. Der Abstand der Lochplatte 3 vom Boden 10 des Gefäßes 1 ist veränderbar.

Durch die erfindungsgemäß vorgesehenen, unmittelbar oder mittelbar beheizten Nadeln 2 wird das Nahrungsmittel 4 gleichmäßig erwärmt, so daß ohne die Gefahr von örtlichen Überhitzungen die Kochzeiten kürzer sind und ein gleichmäßig gegartes Nahrungsmittel erhalten wird.

## Patentansprüche

1. Vorrichtung zum Garen von Nahrungsmitteln, mit einem topf- oder pfannenartigen, gegebenfalls durch einen Deckel (8) verschlossenen Gefäß (1), das mit beheizbaren Nadeln (2) ausgerüstet ist, die in dem für die Aufnahme des zu garenden Nahrungsmittels (4) bestimmten Raum, verteilt sind, und die aus wärmeleitendem Werkstoff gefertigt sind, dadurch gekennzeichnet, daß über die Nadeln (2) wenigstens eine zum Boden (10) des Gefäßes (1) parallele und als Auflage für das zu garende Nahrungsmittel (4) dienende Lochplatte (3) gesteckt ist, deren Abstand vom Boden (10) veränderbar ist und daß die Nadeln (2, 2a, 2b, 2c, 2d) direkt oder indirekt beheizbar sind.

2. Vorrichtung nach Anspruch 1, dadurch gekennzeichnet, daß die Nadeln (2, 2a, 2b, 2c, 2d) unabhängig von der Beheizung (6) des Gefäßes (1), des Deckels (8) und/oder der Lochplatte (3) beheizbar sind.

3. Vorrichtung nach Anspruch 1 oder 2, dadurch gekennzeichnet, daß der Abstand der Lochplatte (3) vom Boden (10) des Gefäßes (1) durch verstellbare Stützstifte (11) veränderbar und einstellbar ist.

4. Vorrichtung nach einem der Ansprüche 1 bis 3, dadurch gekennzeichnet, daß die Nadeln einen runden Querschnitt aufweisen.

5. Vorrichtung nach einem der Ansprüche 1 bis 3, dadurch gekennzeichnet, daß die Nadeln (2) eine längs ihrer Achse verlaufende Schneide aufweisen, und im Querschnitt vorzugsweise rhombusförmig sind.

6. Vorrichtung nach einem der Ansprüche 2 bis 5, dadurch gekennzeichnet, daß der Lochplatte (3a) eine Heizung (14) zugeordnet ist.

7. Vorrichtung nach Anspruch 6, dadurch gekennzeichnet, daß die Lochplatte (3a) zweischalig ausgebildet ist und daß die Heizung (14) im Inneren der Lochplatte (3a) angeordnet ist.

8. Vorrichtung nach einem der Ansprüche 1 bis 7, dadurch gekennzeichnet, daß die Nadeln (2) mit ihren den Spitzen gegenüberliegenden Enden in einem mit einer Heizung (20) versehenen Raum im Gefäß (1) und/oder im Deckel (8) aufgenommen sind.

9. Vorrichtung nach Anspruch 7, dadurch gekennzeichnet, daß die Heizung (20) in einem von Zwischenwänden (17, 18) begrenzten Raum des Gefäßes (1) und/oder des Deckels (8) aufgenommen ist.

10. Vorrichtung nach Anspruch 8 oder 9, dadurch gekennzeichnet, daß die Nadeln (2) durch die dem für die Aufnahme des Nahrungsmittels (4) bestimmten Raum benachbarte Zwischenwand (17, 17a) wärmeisolierend, vorzugsweise durch isolierende Hülsen (7) hindurchgeführt werden.

11. Vorrichtung nach einem der Ansprüche 1 bis 10, dadurch gekennzeichnet, daß über die Nadeln (2) zwei Lochplatten (3, 3a) gesteckt sind, zwischen welchen das zu garende Nahrungsmittel (4) aufgenommen ist.

12. Vorrichtung nach einem der Ansprüche 1 bis 11, dadurch gekennzeichnet, daß die Nadeln (2b, 2d) hohl ausgebildet sind und daß dem Hohlraum jeder Nadel (2b, 2d) eine Heizeinrichtung zugeordnet ist.

13. Vorrichtung nach einem der Ansprüche 1 bis 12, dadurch gekennzeichnet, daß die Nadeln (2d) hohl ausgebildet sind und mit einem Raum (9), in dem ein flüssiges, in das zu garende Nahrungsmittel (4) einzubringendes Medium aufgenommen ist, kommunizieren.

14. Vorrichtung nach einem der Ansprüche 1 bis 13, dadurch gekennzeichnet, daß die Nadeln (2) im Boden (10) des Gefäßes (1) befestigt sind.

15. Vorrichtung nach einem der Ansprüche 1 bis 14, dadurch gekennzeichnet, daß die Nadeln (2) im Deckel (8) des Gefäßes (1) befestigt sind.

16. Vorrichtung nach einem der Ansprüche 1 bis 15, dadurch gekennzeichnet, daß sowohl vom Boden (10) des Gefäßes (1) als auch von der Abschlußplatte des Deckels (8) Nadeln (2) in den für die Aufnahme von zu garendem Nahrungsmittel (4) bestimmten Raum des Gefäßes (1) ragen.

17. Vorrichtung nach einem der Ansprüche 1 bis 16, dadurch gekennzeichnet, daß die Nadeln (2) über die Fläche des Bodens (10) des Gefäßes (1) gleichmäßig verteilt angeordnet sind.
